# EUROPEAN PATENT SPECIFICATION

(11) **EP 2 666 683 B1**
(45) Date of publication and mention of the grant of the patent: **01.01.2020**
(21) Application number: 12736064.2
(22) Date of filing: 19.01.2012
(51) Int. Cl.: B60T 7/12, E02F 9/02, E02F 9/22, B60W 10/04, B60T 13/66

(54) **WHEEL-TYPE WORK MACHINE WITH A HYDRAULIC DRIVE SYSTEM**
ARBEITSMASCHINE MIT RÄDERN MIT EINEM HYDRAULISCHEN ANTRIEBSSYSTEM
MACHINE DE CHANTIER DU TYPE SUR ROUES AVEC UN SYSTÈME D'ENTRAÎNEMENT HYDRAULIQUE

(30) Priority: 21.01.2011 JP 2011011081
(43) Date of publication of application: 27.11.2013
(73) Proprietor: Hitachi Construction Machinery Co., Ltd., Bunkyo-ku Tokyo 112-8563 (JP)
(72) Inventor: KAYANE Masahiro, Tsuchiura-shi Ibaraki 300-0013 (JP); KODAKA Katsuaki, Tsuchiura-shi Ibaraki 300-0013 (JP)
(74) Representative: Manitz Finsterwald Patent- und Rechtsanwaltspartnerschaft mbB
(86) International application number: PCT/JP2012/051097
(87) International publication number: WO 2012/099210

(56) References cited:
- EP-A2- 1 186 494
- JP-A- 2002 087 231
- JP-A- 2002 274 140
- JP-A- 2005 041 277
- JP-A- 2006 007 849

## Description

### Technical Field

This invention relates to a hydraulic drive system for a wheeled working machine such as a wheel excavator, wheel loader or crane vehicle. The hydraulic drive system has a switch that makes it possible to select a work brake mode which is a temporary stop mode for a travel base to be performed upon conducting work by working equipment.

### Background Art

Conventionally, a wheel excavator is disclosed in Patent Document 1. The wheel excavator is provided with a travel base having front wheels and rear wheels, a main body mounted on the travel base, for example, an upperstructure, and working equipment attached to the upperstructure and including a boom, an arm and the like. In association with the wheel excavator, there is also disclosed a hydraulic drive system provided with a travel motor for driving the travel base, a traveling directional control valve for controlling the travel motor, a travel control device for switchingly operating the traveling directional control valve, for example, an accelerator pedal, a brake system for braking the front wheels and rear wheels, a braking directional control valve for controlling the brake system, and a brake control device for switchingly operating the braking directional control valve, for example, a brake pedal.

Patent Document 2 also discloses a hydraulic drive system in association with such a wheel excavator as described above. The hydraulic drive system is provided with a brake control amount sensor for detecting a control amount of a brake pedal, for example, a pressure sensor, a switch capable of selecting a work brake mode which is a temporary stop mode for a travel base to be performed upon conducting work by working equipment, an on/off solenoid valve capable of controlling a braking directional control valve, and a controller capable of outputting a brake actuation signal or brake release signal to the above-mentioned solenoid valve responsive to a signal outputted from the above-mentioned pressure sensor.

It is to be noted that, in a state where the work brake mode has been selected by the switch disclosed in Patent Document 2, a brake actuation signal is outputted from the controller to the solenoid valve when the brake pedal is depressed rather long. At this time, the solenoid valve outputs a signal to switch the braking directional control value such that the brake system is brought into a braking state and this braking state is maintained. When the brake pedal is depressed again in such a braking state as mentioned above, a brake release signal is outputted from the controller to the solenoid valve. As this time, the solenoid valve outputs a signal to switch the braking directional control valve such that the braking system is brought into a brake releasing state.

### Prior Art Documents

### Patent Documents

Patent Document 1: JP-A-2002-274140
Patent Document 2: JP-A-2006-7849

EP 1186494 A discloses a brake fluid pressure retaining apparatus. The control unit switches the magnitude of creep driving force between a greater condition and a smaller condition in accordance with a depression of the brake pedal. When undesirable backward movement of the vehicle is detected, a retained brake fluid pressure is released.

### Problem to Be Solved by the Invention

Modifications of the above-described technology disclosed in Patent Document 1 in view of the above-described technology disclosed in Patent Document 2, however, raise a problem upon a hill start. Described specifically, when the accelerator pedal is depressed lightly while the travel base is temporarily standing on a hill road, a break release signal is outputted from the controller to the solenoid valve and the brake system is brought into a brake releasing state. As the depression amount of the accelerator pedal is light at this time, the wheel excavator is brought into a state that no travel drive pressure can be secured. The wheel excavator may, therefore, roll down the hill road under its dead load.

### Disclosure of the Invention

An object of the present invention is to provide a hydraulic drive system for a wheeled working machine, which allows the wheeled working machine to start without rolling down a hill road when making a hill start.

### Means for Solving the Problem

A wheeled working machine that achieves the above object has the features of claim 1, amongst them a hydraulic drive system, a travel base provided with front wheels and rear wheels, a main body mounted on the travel base and working equipment attached to the main body. Said hydraulic drive system is provided with a travel motor for driving the travel base, a traveling directional control valve for controlling the travel motor, a travel control device for switchingly operating the traveling directional control valve, a brake system for braking the front wheels and rear wheels, a braking directional control valve for controlling the brake system, a brake control device for switchingly operating the braking directional control valve, a brake control amount sensor for detecting a control amount of the brake control device, a selector switch capable of selecting a work brake mode which is a temporary stop mode for the travel base to be performed upon conducting work by the working equipment, a proportional solenoid valve capable of controlling the braking directional control valve, and a controller capable of outputting a brake actuation signal or brake release signal to the solenoid valve responsive to a signal outputted from the brake control amount sensor, the hydraulic drive system is further provided with a travel control amount sensor for detecting a control amount of the travel control device, and the controller further comprises a delay means for introducing a time delay into the brake release signal responsive to a signal outputted from the travel control amount sensor and performs processing such that the brake release signal as delayed by the delay means is outputted to the proportional solenoid valve.

The delay means in the controller comprises a low-pass filter for passing the brake release signal and a coefficient setting unit for setting a coefficient corresponding to an amount of control outputted from the travel control amount sensor, and the controller performs processing such that pass characteristics for the brake release signal through the low-pass filter are controlled to pass characteristics corresponding to the coefficient set at the coefficient setting unit.

The present invention may also be characterized in that in the above-described invention, the hydraulic drive system is further provided with a tilt angle sensor for detecting a tilt angle of the main body relative to a horizontal plane, and the controller is further provided with a correction means for performing a correction to decrease a value of the brake release signal according to a signal outputted from the tilt angle sensor and a signal outputted from the travel control amount sensor.

The present invention may also be characterized in that in the above-described invention, the hydraulic drive system is further provided with a travel drive pressure sensor for detecting a pressure that drives the travel motor, and the controller performs control processing such that the brake release signal is outputted when relative to a required drive pressure computed from the tilt angle sensor, the travel drive pressure has substantially exceeded the required drive pressure.

### Advantageous Effects of the Invention

According to the present invention, when the travel control device is manipulated in a state that work brake has been applied and the wheeled working machine is temporarily standing on a hill road, a brake actuation signal is switched to a brake release signal with a time delay according to the travel control amount, and this brake release signal is outputted to the proportional solenoid valve. Before the proportional solenoid valve is actuated to release the brake, the wheeled working machine has, therefore, been brought into a state that a sufficient travel drive pressure is secured. The hydraulic drive system can hence provide improved hill start performance compared with the conventional hydraulic drive systems.

### Brief Description of the Drawings

FIG. 1 is a side view of a wheel excavator as one example of a wheeled working machine, on which a first embodiment of the hydraulic drive system according to the present invention is arranged.
FIG. 2 is a hydraulic circuit diagram showing a hydraulic drive system according to the first embodiment, which is arranged on the wheel excavator illustrated in FIG. 1.
FIG. 3 is a block diagram illustrating the construction of a controller arranged in the hydraulic drive system according to the first embodiment shown in FIG. 2.
FIG. 4 is a diagram depicting characteristics of a low-pass filter arranged in the first embodiment.
FIG. 5 is a hydraulic circuit diagram showing a second embodiment of the hydraulic drive system according to the present invention.
FIG. 6 is a block diagram illustrating the construction of a controller arranged in the hydraulic drive system according to the second embodiment shown in FIG. 5.
FIG. 7 is a hydraulic circuit diagram showing a third embodiment of the hydraulic drive system according to the present invention.
FIG. 8 is a block diagram illustrating the construction of a controller arranged in the hydraulic drive system according to the third embodiment shown in FIG. 7.

### Modes for Carrying out the Invention

Embodiments of the hydraulic drive system according to the present invention for the wheeled working machine will hereinafter be described based on the drawings.

### First Embodiment

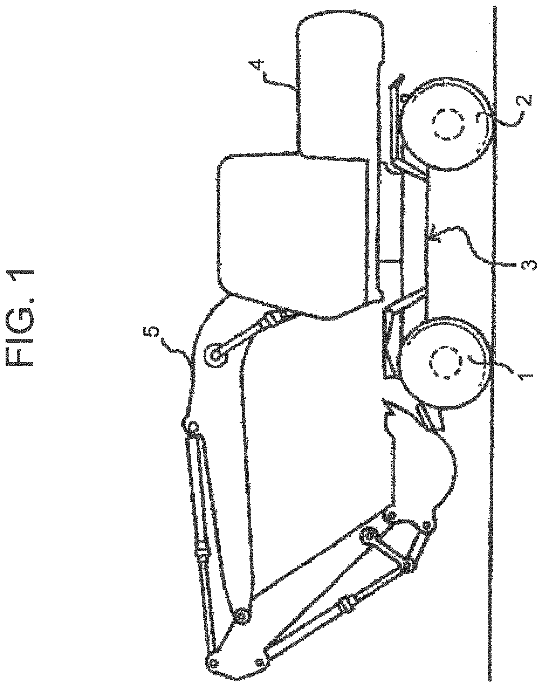

With reference to FIGS. 1 through 4, a description will be made about the first embodiment of the present invention.

As shown in FIG. 1, a wheel excavator as a wheeled working machine, on which the first embodiment is arranged, has a travel base 3 provided with front wheels 1 and rear wheels 2, a main body mounted on the travel base 3, specifically an upperstructure 4, and working equipment 5 attached to the upperstructure 4 and including a boom, an arm and the like.

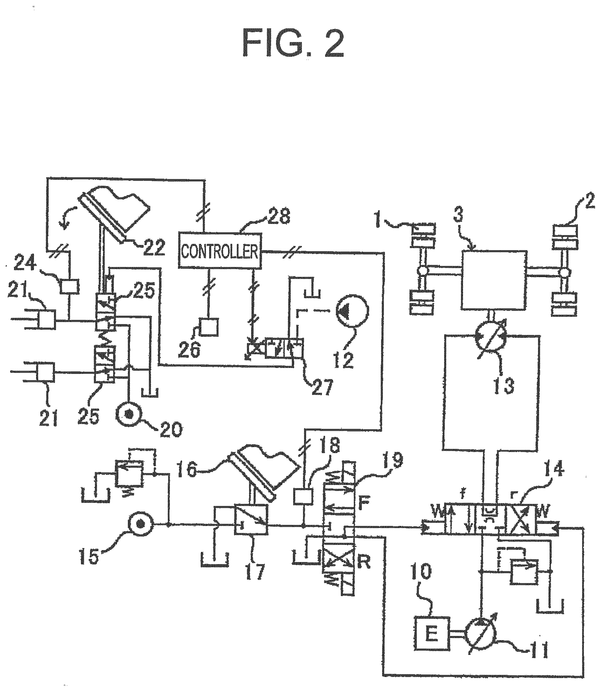

The first embodiment of the hydraulic drive system, which is arranged on the wheel excavator shown in FIG. 1, is provided, as shown in FIG. 2, with a hydraulic pump 11 drivable by an engine 10, a travel motor 13 drivable by pressure oil from the hydraulic pump 11, a traveling directional control valve 14 for controlling a flow of pressure oil from the hydraulic pump 11 to the travel motor 13, and a pilot hydraulic circuit for operating the traveling directional control valve 14. The pilot hydraulic circuit has a pilot oil pressure source 15, a pilot valve 17 for producing a pilot pressure according to a control amount of a travel control device, for example, an accelerator pedal 16, a travel control amount sensor for detecting the travel control amount, for example, a travel control amount-determining pressure sensor 18, and a forward-reverse control valve 19 switchable to a forward position, reverse position or neutral position by a manipulation of a forward-reverse selector switch 26.

A brake circuit, which is arranged in the first embodiment, has an oil pressure source 20, a pilot pump 12 drivable by the engine 10, unillustrated brake disks for applying a brake force to the front wheels 1 and rear wheels 2, brake cylinders 21 for driving the brake disks, a brake control device, for example, a brake pedal 22, a brake control amount sensor for detecting a brake control amount of the brake pedal 22, for example, a brake control amount-determining pressure sensor 24, and braking directional control valves 25 for delivering pressure oil from the pressure oil source 20 to the brake cylinders 21 according to the brake control amount.

Also provided are the above-mentioned selector switch 26 for selecting a work brake mode which is a temporary stop mode for the travel base 3 to be performed upon conducting work by the working equipment 5, a proportional solenoid valve 27 as a solenoid valve capable of controlling the braking directional control valves 25, and a controller 28 capable of outputting a brake actuation signal S1 or brake release signal S2 to the proportional solenoid valve 27 responsive to a signal outputted from the brake control amount-determining pressure sensor 24.

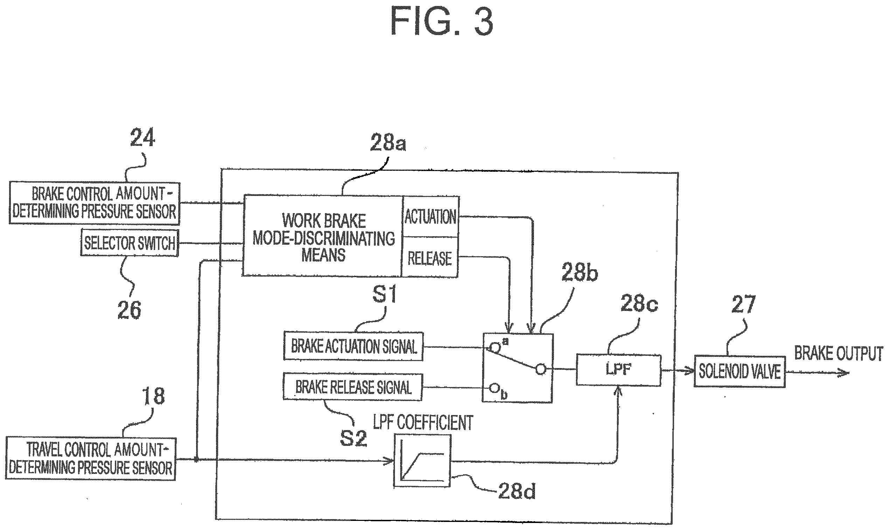

As illustrated in FIG. 3, the controller 28 includes a work brake mode-discriminating means 28a for discriminating, based on signals from the selector switch 26 and brake control amount-determining pressure sensor 24, whether or not the hydraulic drive system is in the above-mentioned work brake mode, and a switching unit 28b for outputting the brake actuation signal S1 to the proportional solenoid valve 27 when the hydraulic drive system is discriminated by the work brake mode-discriminating means 28a to be in the work brake mode (to be actuated) or the brake release signal S2 to the proportional solenoid valve 27 when the hydraulic drive system is discriminated by the work brake mode-discriminating means 28a to be not in the work brake mode (to be released). This controller 28 also includes a delay means for introducing a time delay into a signal outputted from the travel control amount-determining pressure sensor 18, and performs processing such that the brake release signal S2 as delayed by the delay means is outputted to the proportional solenoid valve 27.

The above-mentioned delay means in the controller 28 includes a low-pass filter 28c for passing the brake release signal S2 and a coefficient setting unit 28d for setting a coefficient corresponding to a control amount outputted from the travel control amount sensor 18. The controller 28 performs processing such that pass characteristics for the brake release signal S2 through the low-pass filter 28c are controlled to pass characteristics corresponding to the coefficient set by the coefficient setting unit 28d.

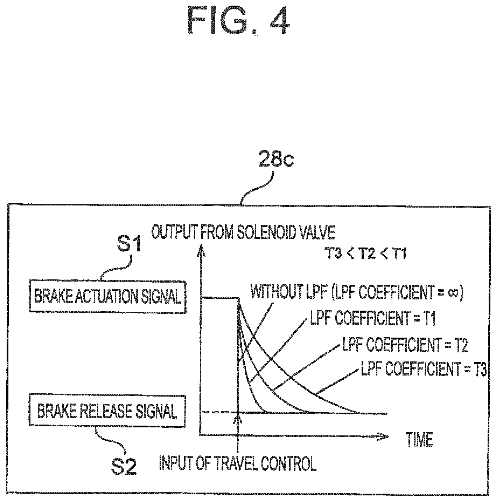

As depicted in FIG. 4, the time until the brake release signal S2 is outputted is relatively short when the coefficient set by the coefficient setting unit 28d is relatively large T1, but the time until the brake release signal S2 is outputted is relatively long when the coefficient set by the coefficient setting unit 28d is relatively small T3.

In a state that in the first embodiment constructed as described above, the work brake mode has been selected by the selector switch 26 as illustrated in FIG. 3 and the brake pedal 22 has been depressed rather long, the brake actuation signal S1 is outputted to the proportional solenoid valve 27 via the brake control amount-determining pressure sensor 24 inside the controller 28, and work brake is applied to the front wheels 1 and rear wheels 2.

When the accelerator pedal 16 is depressed in the above-described state, a low-pass filter 28c coefficient is set by the coefficient setting unit 28d according to a travel control amount obtained via the travel control amount-determining pressure sensor 18 owing to the interposition of the low-pass filter 28c between the brake release signal S2 and the proportional solenoid valve 27, and therefore, a time delay can be introduced upon outputting the brake release signal S2 to the proportional solenoid valve 27.

Now assume that the accelerator pedal 16 is depressed to release the brakes in a state that the wheel excavator is in the work brake mode and is standing on a hill road. Then, with a sufficient travel drive pressure being secured, the proportional solenoid valve 27 is actuated, the braking directional control valves 25 are switched, the brake cylinders 21 are actuated, and the brakes are released. Therefore, the wheel excavator is allowed to start without rolling down the hill road when making a hill start, and can be provided with improved hill start performance.

As depicted in FIG. 4, the low-pass filter coefficient 28e to be set by the coefficient setting unit 28d is changed to T3, T2 and T1 as the travel control amount increases. Changes can, therefore, be made to the time delay until the brake release signal S2 is reached. It is, hence, possible to provide improved hill start performance irrespective of the travel control amount obtained from the travel control amount-determining pressure sensor 18.

### Second Embodiment

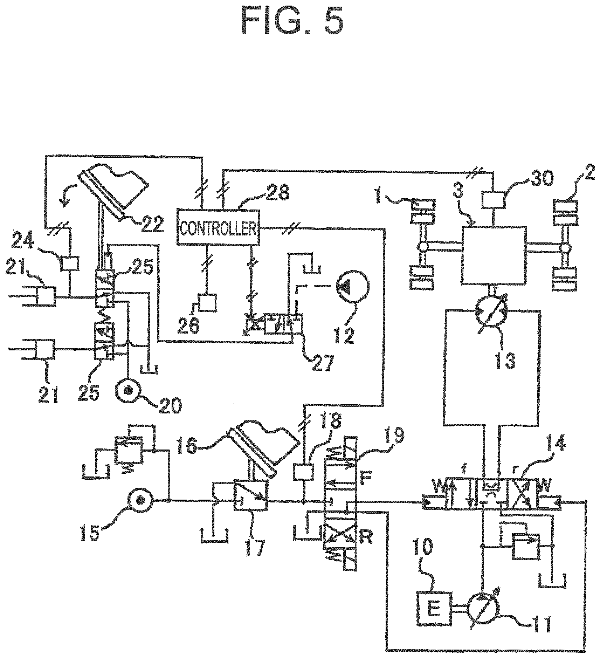

In the second embodiment shown in FIG. 5, a travel circuit is provided with the hydraulic pump 11 drivable by the engine 10, the travel motor 13 drivable by pressure oil from the hydraulic pump 11, a tilt angle sensor for detecting a tilt angle of the main body, specifically the upperstructure 4 relative to a horizontal plane, the traveling directional control valve 14 for controlling a flow of pressure oil from the hydraulic pump 11 to the travel motor 13, and the pilot hydraulic circuit for operating the traveling directional control valve 14. Similar to the above-described first embodiment, a pilot hydraulic circuit has the pilot oil pressure source 15, the pilot valve 17 for producing a pilot pressure according to a control amount of a travel control device, for example, the accelerator pedal 16, the travel control amount sensor for detecting the travel control amount, for example, the travel control amount-determining pressure sensor 18, and the forward-reverse control valve 19 switchable to the forward position, reverse position or neutral position by a manipulation of the forward-reverse selector switch 26.

Similar to the first embodiment, a brake circuit also has the oil pressure source 20, the pilot pump 12 drivable by the engine 10, the unillustrated brake disks for applying a brake force to the front wheels 1 and rear wheels 2, the brake cylinders 21 for driving the brake disks, a brake control device, for example, the brake pedal 22, a brake control amount sensor for detecting a brake control amount of the brake pedal 22, for example, the brake control amount-determining pressure sensor 24, and the braking directional control valves 25 for delivering pressure oil from the pressure oil source 20 to the brake cylinders 21 according to the brake control amount.

Also provided are the selector switch 26 for selecting the work brake mode which is the temporary stop mode for the travel base 3 to be performed upon conducting work by the working equipment 5, the proportional solenoid valve 27 as a solenoid valve capable of controlling the braking directional control valves 25, and the controller 28 capable of outputting a brake actuation signal S1 or brake release signal S2 to the proportional solenoid valve 27 responsive to a signal outputted from the brake control amount-determining pressure sensor 24.

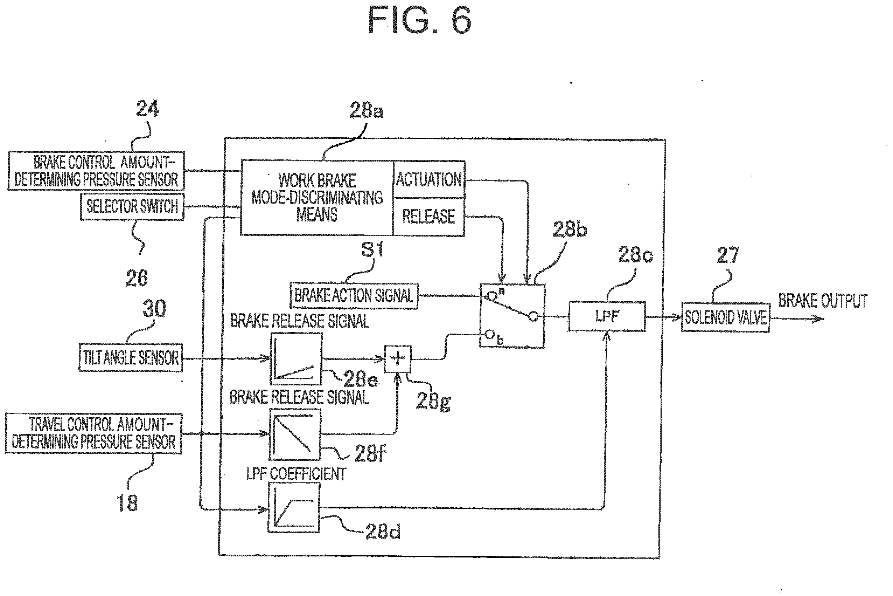

In this second embodiment, the controller 28 includes, as illustrated in FIG. 6, the work brake mode-discriminating means 28a for discriminating, based on signals from the selector switch 26 and brake control amount-determining pressure sensor 24, whether or not the hydraulic drive system according to the second embodiment is in the above-mentioned work brake mode, and the switching unit 28b for outputting the brake actuation signal S1 to the proportional solenoid valve 27 when the hydraulic drive system is discriminated by the work brake mode-discriminating means 28a to be in the work brake mode (to be actuated) or the brake release signal S2 to the proportional solenoid valve 27 when the hydraulic drive system is discriminated by the work brake mode-discriminating means 28a to be not in the work brake mode (to be released). This controller 28 also includes a delay means for introducing a time delay into a signal outputted from the travel control amount-determining pressure sensor 18, and performs processing such that the brake release signal S2 as delayed by the delay means is outputted to the proportional solenoid valve 27.

The above-mentioned delay means in the controller 28 includes the low-pass filter 28c for passing the brake release signal S2 and the coefficient setting unit 28d for setting a coefficient corresponding to a control amount outputted from the travel control amount sensor 18. The controller 28 performs processing such that pass characteristics for the brake release signal S2 through the low-pass filter 28c are controlled to pass characteristics corresponding to the coefficient set by the coefficient setting unit 28d. Also in these respects, the second embodiment is similar to the first embodiment.

This second embodiment is provided with the above-mentioned tilt angle sensor for detecting a tilt angle of the travel base 3 relative to a horizontal plane, specifically the tilt angle sensor 30, and the controller 28 is provided with a correction means for correcting, responsive to a signal outputted from the tilt angle sensor 30 and a signal outputted from the travel control amount-determining pressure sensor 18, such that the value of the brake release signal S2 is decreased.

As illustrated in FIG. 6, this correction means comprises a first function generator 28e and second function generator 28f and an adder 28g for adding signal values outputted from these function generators 28e,28f and outputting an added signal value to the switching unit 28b. These first and second function generators 28e,28f and adder 28g are included in the controller 28. The first function generator 28e has characteristics that increase the value of the brake release signal S2 as the value of the tilt angle outputted from the tilt angle sensor 30 increases. The second function generator 28f, on the other hand, has characteristics that decrease the value of the brake release signal S2 as the value of the travel control amount outputted from the travel control amount-determining pressure sensor 18 increases.

Accordingly, the brake release signal S2 to be outputted and delivered from the adder 28g to the switching unit 28b increases in value as the tilt of the travel base 3 increases, in other words, the gradient of the hill road on which the wheel excavator stands increases. The remaining construction is similar to that of the above-described first embodiment.

According to the second embodiment constructed as described above, it is possible, as in the first embodiment, to secure a travel drive pressure by delaying the time until a brake released state is reached and, if the gradient of a hill road is large, also to realize a hill start without rolling down the hill road while slightly maintaining a braked state by a brake system, in other words, causing brake dragging by restraining an actuation of the proportional solenoid valve 27 such that the opening of the braking directional control valve 25 is limited a little. In other words, even if a hill road has a large gradient, a good hill start can be realized without rolling down the hill road.

### Third Embodiment

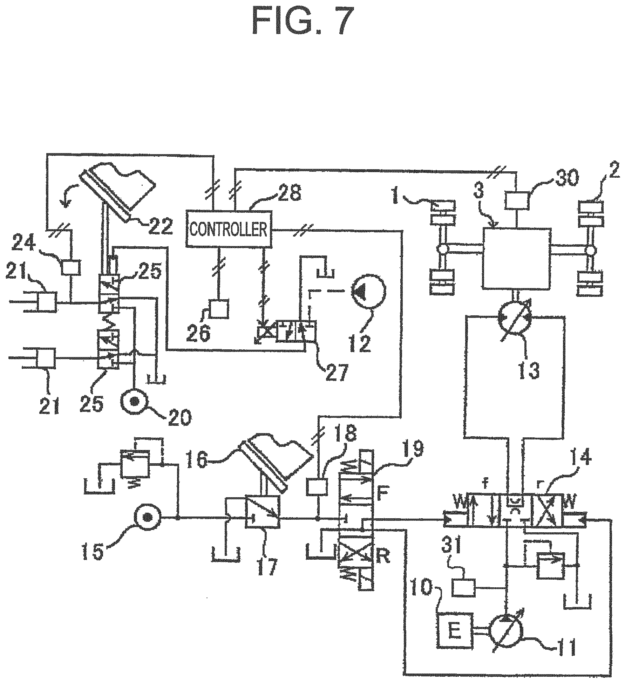

In the third embodiment shown in FIG. 7, a travel circuit is provided with the hydraulic pump 11 drivable by the engine 10, the travel motor 13 drivable by pressure oil from the hydraulic pump 11, the tilt angle sensor 30 for detecting a tilt angle of the upperstructure 4 relative to a horizontal plane, the traveling directional control valve 14 for controlling a flow of pressure oil from the hydraulic pump 11 to the travel motor 13, and a pilot hydraulic circuit for operating the traveling directional control valve 14. The pilot hydraulic circuit has the pilot oil pressure source 15, the pilot valve 17 for producing a pilot pressure according to a control amount of a travel control device, for example, the accelerator pedal 16, a travel control amount sensor for detecting the travel control amount, for example, the travel control amount-determining pressure sensor 18, and the forward-reverse control valve 19 switchable to the forward position, reverse position or neutral position by a manipulation of the forward-reverse selector switch 26.

A brake circuit has the oil pressure source 20, the pilot pump 12 drivable by the engine 10, the unillustrated brake disks for applying a brake force to the front wheels 1 and rear wheels 2, the brake cylinders 21 for driving the brake disks, a brake control device, for example, the brake pedal 22, a brake control amount sensor for detecting a brake control amount of the brake pedal 22, for example, the brake control amount-determining pressure sensor 24, and the braking directional control valves 25 for delivering pressure oil from the pressure oil source 20 to the brake cylinders 21 according to the brake control amount.

Also provided are the selector switch 26 for selecting the work brake mode which is the temporary stop mode for the travel base 3 to be performed upon conducting work by the working equipment 5, the proportional solenoid valve 27 as a solenoid valve capable of controlling the braking directional control valves 25, and the controller 28 capable of outputting a brake actuation signal S1 or brake release signal S2 to the proportional solenoid valve 27 responsive to a signal outputted from the brake control amount-determining pressure sensor 24.

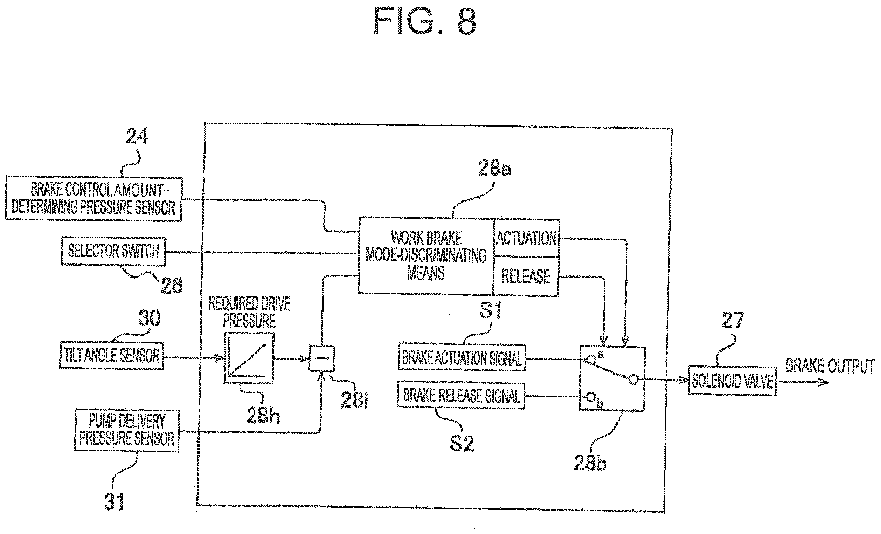

In this third embodiment, the controller 28 includes, as illustrated in FIG. 8, the work brake mode-discriminating means 28a for discriminating, based on signals from the selector switch 26 and brake control amount-determining pressure sensor 24, whether or not the hydraulic drive system according to the third embodiment is in the above-mentioned work brake mode, and the switching unit 28b for outputting the brake actuation signal S1 to the proportional solenoid valve 27 when the hydraulic drive system is discriminated by the work brake mode-discriminating means 28a to be in the work brake mode (to be actuated) or the brake release signal S2 to the proportional solenoid valve 27 when the hydraulic drive system is discriminated by the work brake mode-discriminating means 28a to be not in the work brake mode (to be released) . In these respects, the third embodiment is similar to the above-described second embodiment.

This third embodiment is provided with a function generator 28h for determining a required drive pressure according to a signal outputted from the tilt angle sensor 30 that detects a tilt angle of the main body, specifically the upperstructure 4 relative to the horizontal plane, a sensor for detecting a travel drive pressure that rotates the travel motor 13, for example, a pump delivery pressure sensor 31, and a subtractor 28i for subtracting a signal, which is outputted from the function generator 28h, from a signal outputted from the pump delivery pressure sensor 31. The function generator 28h has characteristics such that the required drive pressure increases as the signal outputted from the tilt angle sensor 30 increases, in other words, the tilt angle increases.

It is, therefore, possible to provide improved hill start performance by setting such that as depicted in FIG. 8, the brake release signal S2 is outputted when the signal outputted from the pump delivery pressure sensor 31 becomes greater to a certain extent than the drive pressure required by the function generator 28h.

According to the third embodiment constructed as described above, it is possible, as in the first and second embodiments, to secure a sufficient travel drive pressure until a brake released state is reached and, if the gradient of a hill road is large, also to realize a hill start without rolling down the hill road while maintaining a braked state by a brake system, in other words, applying a brake by limiting the opening of the braking directional control valve 25 until the drive pressure of the travel motor 13 exceeds the required drive pressure corresponding to the tilt angle. In other words, even if a hill road has a large gradient, a good hill start can be realized without rolling down the hill road.

### Legend

- 1: Front wheels
- 2: Rear wheels
- 3: Travel base
- 4: Upperstructure
- 5: Working equipment
- 10: Engine
- 11: Hydraulic pump
- 12: Pilot pump
- 13: Travel motor
- 14: Traveling directional control valve
- 15: Pilot oil pressure source
- 16: Brake pedal
- 17: Pilot valve
- 18: Travel control amount-determining pressure sensor
- 19: Forward-reverse control valve
- 20: Oil pressure source
- 21: Brake cylinder
- 22: Brake pedal
- 24: Brake control amount-determining pressure sensor
- 25: Braking directional control valve
- 26: Selector switch
- 27: Proportional solenoid valve
- 28: Controller
- 28a: Work brake mode-discriminating means
- 28b: Switching unit
- 28c: Low-pass filter
- 28d: Coefficient setting unit
- 28e: Function generator
- 28f: Function generator
- 28g: Adder
- 28h: Function generator
- 28i: Subtractor
- 30: Tilt angle sensor
- 31: Travel motor drive pressure sensor
- S1: Brake actuation signal
- S2: Brake release signal

## Claims

1. A wheeled working machine having a travel base (3) provided with front wheels (1) and rear wheels (2), a main body mounted on the travel base (3), a working equipment (5) attached to the main body, and a hydraulic drive system being provided with
a travel motor (13) for driving the travel base (3),
a traveling directional control valve (14) for controlling the travel motor (13),
a travel control device for switchingly operating the traveling directional control valve (14),
a brake system for braking the front wheels (1) and rear wheels (2),
a braking directional control valve (25) for controlling the brake system,
a brake control device for switchingly operating the braking directional control valve (25), **characterised in that** the hydraulic drive system further comprises
a brake control amount sensor (24) for detecting a control amount of the brake control device,
a selector switch (26) capable of selecting a work brake mode which is a temporary stop mode for the travel base (3) to be performed upon conducting work by the working equipment,
a proportional solenoid valve (27) capable of controlling the braking directional control valve (25),
a controller (28) capable of outputting a brake actuation signal (S1) or brake release signal (S2) to the proportional solenoid valve (27) responsive to a signal outputted from the brake control amount sensor (24), and
a travel control amount sensor (18) for detecting a control amount of the travel control device,
wherein
the controller (28) further comprises a delay means for introducing a time delay into the brake release signal (S2) responsive to a signal outputted from the travel control amount sensor (18) and is adapted to perform processing such that the brake release signal (S2) as delayed by the delay means is outputted to the proportional solenoid valve (27),
wherein the delay means comprises a low-pass filter (28c) for passing the brake release signal (S2) and a coefficient setting unit (28d) for setting a coefficient corresponding to a control amount outputted from the travel control amount sensor (18), and
wherein the controller (28) is adapted to perform processing such that pass characteristics for the brake release signal (S2) through the low-pass filter (28c) are controlled to pass characteristics corresponding to the coefficient set by the coefficient setting unit (28d).

2. The working machine according to claim 1, wherein:
the hydraulic drive system is further provided with a tilt angle sensor (30) for detecting a tilt angle of the main body relative to a horizontal plane, wherein the controller (28) is further provided with a correction means for
performing a correction to decrease a value of the brake release signal (S2) according to a signal outputted from the tilt angle sensor (30) and a signal outputted from the travel control amount sensor (18).

3. The working machine according to claim 2, wherein:
the hydraulic drive system is further provided with a travel drive pressure sensor (31) for detecting a pressure that drives the travel motor (13), wherein the controller (28) is adapted to perform control processing such that the brake release signal (S2) is outputted when relative to a required drive pressure computed from the tilt angle sensor (30), the travel drive pressure has substantially exceeded the required drive pressure.

## Patentansprüche

1. Mit Rädern versehene Arbeitsmaschine, die eine Fahrbasis (3), die mit Vorderrädern (1) und mit Hinterrädern (2) versehen ist, einen Hauptkörper, der an der Fahrbasis (3) montiert ist, eine Arbeitsausstattung (5), die an dem Hauptkörper befestigt ist, sowie ein Hydraulikantriebssystem aufweist, umfassend:
einen Fahrmotor (13) zum Antreiben der Fahrbasis (3),
ein Fahrrichtungssteuerventil (14) zum Steuern des Fahrmotors (13),
eine Fahrsteuervorrichtung zum schaltenden Betrieb des Fahrrichtungssteuerventils (14),
ein Bremssystem zum Bremsen der Vorderräder (1) und Hinterräder (2),
ein Bremsrichtungssteuerventil (25) zum Steuern des Bremssystems,
eine Bremssteuervorrichtung zum schaltenden Betrieb des Bremsrichtungssteuerventils (25), **dadurch gekennzeichnet, dass** das Hydraulikantriebssystem ferner umfasst:
einen Bremssteuerbetragssensor (24) zum Steuern eines Steuerbetrags der Bremssteuervorrichtung,
einen Wahlschalter (26), der zum Auswählen eines Arbeitsbremsmodus in der Lage ist, der ein temporärer Stoppmodus für die Fahrbasis (3) ist, der bei Ausführen von Arbeit durch die Arbeitsausstattung ausgeführt wird,
ein Proportionalsolenoidventil (27), das zum Steuern des Bremsrichtungssteuerventils (25) in der Lage ist,
einen Controller (28), der zum Ausgeben eines Bremsbetätigungssignals (S1) oder eines Bremsfreigabesignals (S2) an das Proportionalsolenoidventil (27) in Ansprechen auf ein Signal in der Lage ist, das von dem Bremssteuerbetragssensor (24) ausgegeben wird, und
einen Fahrsteuerbetragssensor (18) zum Detektieren eines Steuerbetrags der Fahrsteuervorrichtung,
wobei
der Controller (28) ferner ein Verzögerungsmittel zum Einführen einer Zeitverzögerung in das Bremsenfreigabesignal (S2) in Ansprechen auf ein Signal umfasst, das von dem Fahrsteuerbetragssensor (18) ausgegeben ist, und derart angepasst ist, eine Bearbeitung auszuführen, so dass das Bremsenfreigabesignal (S2), das durch das Verzögerungsmittel verzögert ist, an das Proportionalsolenoidventil (27) ausgegeben wird,
wobei das Verzögerungsmittel einen Tiefpassfilter (28c) zum Durchgang des Bremsenfreigabesignals (S2) und eine Koeffizienteneinstelleinheit (28d) zum Einstellen eines Koeffizienten entsprechend eines Steuerbetrages umfasst, der von dem Fahrsteuerbetragssensor (18) ausgegeben wird, und
wobei der Controller (28) derart ausgebildet ist, eine Bearbeitung auszuführen, so dass Durchgangscharakteristiken für das Bremsenfreigabesignal (S2) durch den Tiefpassfilter (28) auf Durchgangscharakteristiken gesteuert werden, die dem Koeffizienten entsprechen, der von der Koeffizienteneinstelleinheit (28d) eingestellt wird.

2. Arbeitsmaschine nach Anspruch 1, wobei
das Hydraulikantriebssystem ferner mit einem Kippwinkelsensor (30) zum Detektieren eines Kippwinkels des Hauptkörpers relativ zu einer horizontalen Ebene versehen ist, wobei der Controller (28) ferner mit einem Korrekturmittel zur Ausführung einer Korrektur versehen ist, um einen Wert des Bremsenfreigabesignals (S2) gemäß einem Signal, das von dem Kippwinkelsensor (30) ausgegeben wird, und einem Signal zu verringern, das von dem Fahrsteuerbetragssensor (18) ausgegeben ist.

3. Arbeitsmaschine nach Anspruch 2, wobei
das Hydraulikantriebssystem ferner mit einem Fahrantriebsdrucksensor (31) zum Detektieren eines Drucks versehen ist, der den Fahrmotor (13) antreibt, wobei der Controller (28) derart angepasst ist, eine Steuerbearbeitung auszuführen, so dass das Bremsenfreigabesignal (S2) ausgegeben wird, wenn relativ zu einem erforderlichen Antriebsdruck, der von dem Kippwinkelsensor (30) berechnet ist, der Fahrantriebsdruck im Wesentlichen den erforderlichen Antriebsdruck überschritten hat.

## Revendications

1. Machine de chantier sur roues ayant une base de déplacement (3) dotée de roues avant (1) et de roues arrière (2), un corps principal monté sur la base de déplacement (3), un équipement de travail (5) attaché sur le corps principal, et un système d'entraînement hydraulique qui est pourvu
d'un moteur de déplacement (13) pour entraîner la base de déplacement (3),
d'une valve de commande de direction de déplacement (14) pour commander le moteur de déplacement (13),
d'un dispositif de commande de déplacement pour actionner par commutation la valve de commande de direction de déplacement (14), d'un système de freinage pour freiner les roues avant (1) et les roues arrière (2),
d'une valve de commande de direction de freinage (25) pour commander le système de freinage,
d'un dispositif de commande de freinage pour actionner par commutation la valve de commande de direction de freinage (25),
**caractérisée en ce que** le système d'entraînement hydraulique comprend en outre
un capteur d'intensité de commande de freinage (24) pour détecter une intensité de commande du dispositif de commande de freinage,
un commutateur sélecteur (26) capable de sélectionner un mode de freinage de travail qui est un mode d'arrêt temporaire pour que la base de déplacement (3) l'exécute lorsqu'un travail est effectué par l'équipement de travail,
une valve solénoïde proportionnelle (27) capable de commander la valve de commande de direction de freinage (25),
un contrôleur (28) capable de délivrer un signal d'actionnement de freinage (S1) ou un signal de relâchement de freinage (S2) vers la valve solénoïde proportionnelle (27) en réponse à un signal délivré depuis le capteur d'intensité de commande de freinage (24), et
un capteur d'intensité de commande de déplacement (18) pour détecter une intensité de commande du dispositif de commande de déplacement, dans laquelle
le contrôleur (28) comprend un moyen à retard pour introduire un retard temporel dans le signal de relâchement de freinage (S2) en réponse à un signal délivré depuis le capteur d'intensité de commande de déplacement (18) et qui est adapté pour effectuer un traitement tel que le signal de relâchement de freinage (S2) tel que retardé par le moyen à retard est délivré vers la valve solénoïde proportionnelle (27),
dans laquelle le moyen à retard comprend un filtre passe-bas (28c) pour laisser passer le signal de relâchement de freinage (S2), et une unité de fixation de coefficient (28d) pour fixer un coefficient correspondant à une intensité de commande délivrée depuis le capteur d'intensité de commande de déplacement (18), et
dans laquelle le contrôleur (28) est adapté pour effectuer un traitement tel que les caractéristiques de passage pour le signal de relâchement de freinage (S2) à travers le filtre passe-bas (28c) sont commandées vers des caractéristiques de passage correspondant au coefficient fixé par l'unité de fixation de coefficient (28d).

2. Machine de chantier selon la revendication 1, dans laquelle :
le système d'entraînement hydraulique est en outre doté d'un capteur d'angle de basculement (30) pour détecter un angle de basculement du corps principal par rapport à un plan horizontal, dans laquelle le contrôleur (28) est en outre doté d'un moyen de correction pour
effectuer une correction afin de diminuer une valeur du signal de relâchement de freinage (S2) en accord avec un signal délivré depuis le capteur d'angle de basculement (30) et avec un signal délivré depuis le capteur d'intensité de commande de déplacement (18).

3. Machine de chantier selon la revendication 2, dans laquelle :
le système d'entraînement hydraulique est en outre doté d'un capteur de pression d'entraînement de déplacement (31) pour détecter une pression qui entraîne le moteur de déplacement (13), dans laquelle le contrôleur (28) est adapté pour effectuer un traitement de commande tel que le signal de relâchement de freinage (S2) est délivré lorsque, en relation à une pression d'entraînement requise calculée depuis le capteur d'angle de basculement (30), la pression d'entraînement de déplacement a sensiblement dépassé la pression d'entraînement requise.
